# EUROPÄISCHE PATENTSCHRIFT

(11) **EP 0 878 478 B1**
(45) Veröffentlichungstag und Bekanntmachung des Hinweises auf die Patenterteilung: **25.08.1999**
(21) Anmeldenummer: 98107927.0
(22) Anmeldetag: 30.04.1998
(51) Int. Cl.: C07F 9/06, C08G 79/02, C08G 77/08

(54) **Verfahren zum Äquilibrieren und/oder Kondensieren von Organosilicium-verbindungen**
Process for equilibration or condensing of organosilicon compounds
Procédé d'équilibrage ou de condensation de composés organosiliciques

(30) Priorität: 07.05.1997 DE 19719340
(43) Veröffentlichungstag der Anmeldung: 18.11.1998
(73) Patentinhaber: Wacker-Chemie GmbH, 81737 München (DE)
(72) Erfinder: Deubzer, Bernward, Dr., 84489 Burghausen (DE); Herzig, Christian, Dr., 83329 Waging am See (DE); Stallbauer, Reinhard, 84367 Zeilarn (DE)
(74) Vertreter: Budczinski, Angelika

(56) Entgegenhaltungen:
- EP-A- 0 626 414
- US-A- 5 380 902
- US-A- 5 403 909

## Beschreibung

Die Erfindung betrifft Zubereitungen aus sauerstoffhaltigen Phosphazenen und tertiären Alkoholen, deren Herstellung sowie deren Verwendung in Verfahren zur Herstellung von Organopolysiloxanen durch Äquilibrierungs- und/oder Kondensationsreaktionen.

Unter dem Begriff Organopolysiloxane sollen im Rahmen dieser Erfindung auch oligomere Siloxane verstanden werden.

Die Herstellung von Organopolysiloxanen durch Äquilibrierungs- und/oder Kondensationsreaktionen in Gegenwart von sauerstoffhaltigen Phosphazenen ist bereits bekannt und beispielsweise in US-A 5,380,902 (Wacker-Chemie GmbH; ausgegeben am 10.1.1995) beschrieben. In US-A 5,403,909 (General Electric Co.; ausgegeben am 04.04.1995) bzw. der entsprechenden DE-A 44 23 924 wird das Reaktionsprodukt eines sauerstoffhaltigen Phosphazenkatalysators mit einer Verbindung, enthaltend mindestens ein aktives Proton mit einem pKa-Wert unter 18, beschrieben, wie u.a. primäre und sekundäre Alkohole, was jedoch im allgemeinen zu Chlorwasserstoffabspaltung, Dunkelfärbung, Ausfällungen und einer Aktivitätsabnahme führt.

Gegenstand der Erfindung sind Zubereitungen, hergestellt durch Vermischen von sauerstoffhaltigen Phosphazenen mit tertiären Alkoholen bei einer Temperatur von 0 bis 70°C und einem Druck zwischen 900 und 1100 hPa.

Die erfindungsgemäßen Zubereitungen können durch beliebiges Vermischen von sauerstoffhaltigen Phosphazenen und tertiären Alkoholen hergestellt werden. So kann z.B. tertiärer Alkohol oder Gemische aus verschiedenen tertiären Alkoholen vorgelegt werden und die zur Erreichung der gewünschten Konzentration benötigte Menge an sauerstoffhaltgen Phosphazenen zugegeben werden oder umgekehrt tertiärer Alkohol oder Gemische aus verschiedenen tertiären Alkoholen zu sauerstoffhaltgen Phosphazenen zugegeben werden.

Die erfindungsgemäße Herstellung der erfindungsgemäßen Zubereitungen wird bei einer Temperatur von 0 bis 70°C, bevorzugt 0 bis 40°C, besonders bevorzugt 0 bis 20°C, und dem Druck der umgebenden Atmosphäre, d.h. zwischen 900 und 1100 hPa, durchgeführt. In jedem Fall ist dafür zu sorgen, daß die Reaktionswärme durch geeignete Maßnahmen, wie langsame Zugabe und/oder Kühlung, so abgeführt wird, daß die Temperatur der erfindungsgemäß hergestellten Zubereitung 70°C, bevorzugt 40°C, nicht überschreitet.

Vorzugsweise wird das erfindungsgemäße Verfahren in einer Atmosphäre, die weitgehend frei von Sauerstoff bzw. Wasser ist, durchgeführt, wie beispielsweise in Stickstoff-, Argon- oder Kohlendioxidatmosphäre, wobei die Stickstoffatmosphäre bevorzugt ist.

Zur Herstellung der erfindungsgemäßen Zubereitungen wird sauerstoffhaltiges Phosphazen zu tertiärem Alkohol im Gewichtsverhältnis von vorzugsweise 1:10 bis 1:0,5, besonders bevorzugt 1:5 bis 1:1, eingesetzt.

Ein weiterer Gegenstand der Erfindung ist ein Verfahren zur Herstellung von Zubereitungen aus sauerstoffhaltigen Phosphazenen und tertiären Alkoholen durch Vermischen von sauerstoffhaltigen Phosphazenen und tertiären Alkoholen bei einer Temperatur von 0 bis 70°C und einem Druck zwischen 900 und 1100 hPa.

Bei den erfindungsgemäß eingesetzten sauerstoffhaltigen Phosphazenen kann es sich um alle beliebigen und bisher bekannten sauerstoffhaltigen Phosphazene handeln. Hierzu sei bespielsweise auf die eingangs genannte US-A 5,380,902 sowie die darin zitierte Literatur J. Emsley et al., J. Chem. Soc. A (1971) S. 2863 ff, H. R. Allcock et al. in J. Am. Chem. Soc. 107 (1985) S. 5167 ff und R. De Jaeger et al., Macromolecules 25(1992) 1254 ff verwiesen.

Vorzugsweise handelt es sich bei den erfindungsgemäß eingesetzten sauerstoffhaltigen Phosphazenen um solche der allgemeinen Formel

Y-PCl₂=N(-PCl₂=N)ₙ-PCl₂O (I),

wobei
Y Chloratom oder Hydroxylgruppe bedeutet und
n 0 oder eine ganze Zahl von 1 bis 8, bevorzugt 0 oder eine ganze Zahl von 1 bis 4, besonders bevorzugt 1 bis 3, bedeutet, und/oder deren Kondensationsprodukte.

Im Fall von Y gleich Hydroxylgruppe, besteht folgende Tautomerie 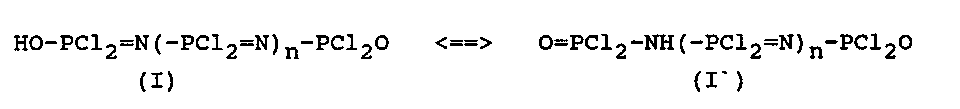 mit n gleich der obengenannten Bedeutung, wobei im allgemeinen das Gleichgewicht bei pH < 7 mehr auf der linken Seite, d.h. bei Verbindung (I), und bei pH > 7 mehr auf der rechten Seite, d.h. bei Verbindung (I'), liegt.

Des weiteren gibt es im Fall von Y gleich Hydroxylgruppe und Phosphazenen mit mehr als drei Phosphoratomen weitere, die mittleren Kettenglieder betreffende Grenzstrukturen, wie z.B.

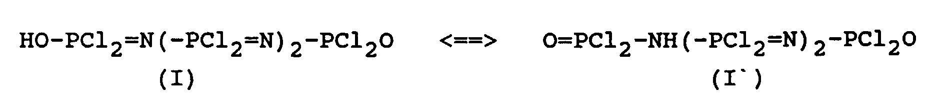

O=PCl₂-N=PCl₂-NH-PCl₂=N-PCl₂=O (Iʺ)

Alle Ausführungen zu Verbindungen der Formel (I) mit Y gleich OH sollen daher uneingeschränkt auch für tautomere Verbindungen, wie etwa die der Formeln (I') und (I"), gelten.

Obwohl durch Formel (I) nicht ausgedrückt, können die Chloratome ganz oder teilweise durch Reste Q ersetzt sein, wobei Q zum Beispiel Hydroxylgruppe, einwertige organische Reste, wie Alkoxyreste, Aryloxyreste, andere Halogenatome als Chlor, Organosiliciumreste und phosphorhaltige Reste bedeutet.

Bevorzugt handelt es sich bei den sauerstoffhaltigen Chlorphosphazenen der Formel (I) um solche, in denen kein Chloratom durch einen Rest Q substituiert ist.

Bei den erfindungsgemäßen Kondensationsprodukten der sauerstoffhaltigen Chlorphosphazene der Formel (I) kann es sich um beliebige Kondensationsprodukte handeln. Läuft beispielsweise der Kondensationsprozess an den terminalen Phosphoratomen zweier sauerstoffhaltiger Chlorphosphazene durch HCl- oder Wasserabspaltung ab, so werden sauerstoffhaltige Phosphazene der Formel (I) erhalten, in denen Y die Bedeutung von -O-PCl₂=N(-PCl₂=N)ₙ-PCl₂O hat mit n gleich der obengenannten Bedeutung. Bei Kondensationsreaktionen an nicht-terminalen Phosphoratomen, insbesondere wenn mindestens ein Chloratom in Formel (I) die Bedeutung von Rest Q gleich Hydroxylrest hat, entstehen sauerstoffhaltige Phosphazene der Formel (I), in denen Q die Bedeutung von phosphorhaltigen Resten, wie -N=P≡ und 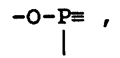 hat.

Beispiele für die erfindungsgemäß eingesetzten sauerstoffhaltigen Chlorphosphazene sind PCl₃=N-PCl₂O, PCl₃=N-PMeClO, PCl₃=N-P(OPh)₂O, PCl₃=N-PMe(OPh)O, PCl₃=N-PEt₂O, PCl₃=N-PCl₂=N-PCl₂O, PCl₃=N(-PCl₂=N)₂-PCl₂O, PCl₃=N(-PCl₂=N)₃-PCl₂O, PCl₃=N(-PCl₂=N)₄-PCl₂O, PCl₃=N(-PCl₂=N)₅-PCl₂O, PCl₃=N(-PCl₂=N)₆-PCl₂O, PCl₃=N-PCl(N=PCl₃)-PCl₂O, PCl₃=N-P(N=PCl₃)₂-PCl₂O, HO-PCl₂=N-PCl₂O, HO-PCl₂=N-P(OPh)₂O, HO-PPh₂=N-PCl₂O, HO-PCl₂=N-PEt₂O, HO-PCl₂=N-PCl₂=N-PCl₂O, HO-PCl₂=N(-PCl₂=N)₂-PCl₂O, HO-PCl₂=N(-PCl₂=N)₃-PCl₂O, HO-PCl₂=N(-PCl₂=N)₄-PCl₂O, HO-PCl₂=N(-PCl₂=N)₅-PCl₂O, HO-PCl₂=N(-PCl₂=N)₆-PCl₂O, HO-PCl₂=N-PCl(N=PCl₃)-PCl₂O, HO-PCl₂=N-P(N=PCl₃)₂-PCl₂O, HO-PCl₂=N-PCl(OH)=N-PCl₂O, HO-PCl₂=N-PCl₂=N-PCl(OH)=N-PCl₂O, HO-PCl₂=N-P(N=PCl₂OH)(N=PCl₃)-PCl₂O, OPCl₂=N-PCl₂-O-PCl₂=N-PCl₂O, OPCl₂(-N=PCl₂)₂-O-(PCl₂=N-)₂PCl₂O, OPCl₂(-N=PCl₂)₃-O-(PCl₂=N-)₃PCl₂O, HO-PCl(OBu)=N-PCl(OBu)=N-PCl(OBu)O, HO-PCl(OPh)=N-PCl(OPh)=N-PCl(OPh)O, HO-PCl₂=N-PCl(OPCl₂=N-PCl₂=N-PCl₂O)=N-PCl₂O und HO-PCl₂=N-PCl₂=N-PCl(OSiMe₂[OSiMe₂]₁₀OH)=N-PCl₂O, wobei PCl₃=N-PCl₂O, PCl₃=N-PCl₂=N-PCl₂O, PCl₃=N(-PCl₂=N)₂-PCl₂O, PCl₃=N(-PCl₂=N)₃-PCl₂O, PCl₃=N(-PCl₂=N)₄-PCl₂O, HO-PCl₂=N-PCl₂O, HO-PCl₂=N-PCl₂=N-PCl₂O, HO-PCl₂=N(-PCl₂=N)₂-PCl₂O, HO-PCl₂=N(-PCl₂=N)₃-PCl₂O, HO-PCl₂=N(-PCl₂=N)₄-PCl₂O, OPCl₂=N-PCl₂-O-PCl₂=N-PCl₂O, OPCl₂(-N=PCl₂)₂-O-(PCl₂=N-)₂PCl₂O und OPCl₂(-N=PCl₂)₃-O-(PCl₂=N-)₃PCl₂O bevorzugt und PCl₃=N-PCl₂=N-PCl₂O, PCl₃=N(-PCl₂=N)₂-PCl₂O, PCl₃=N(-PCl₂=N)₃-PCl₂O, HO-PCl₂=N-PCl₂=N-PCl₂O, HO-PCl₂=N(-PCl₂=N)₂-PCl₂O sowie HO-PCl₂=N(-PCl₂=N)₃-PCl₂O besonders bevorzugt eingesetzt werden mit Me gleich Methylrest, Et gleich Ethylrest, Bu gleich n-Butylrest und Ph gleich Phenylrest.

Die sauerstoffhaltigen Phosphazene können nach in der Chemie bekannten Verfahren, wie etwa in den obengenannten Literaturstellen beschrieben, hergestellt werden. Beispielsweise können sauerstoffhaltige Phosphazene durch Umsetzung von ionischen Phosphazenen mit Hydroxylgruppen aufweisenden Verbindungen hergestellt werden.

Die im erfindungsgemäßen Verfahren zur Herstellung der erfindungsgemäßen Zubereitungen eingesetzten tertiären Alkohole sind Alkohole, bei denen die Hydroxylgruppe an ein tertiäres Kohlenstoffatom gebunden ist, d.h. an ein Kohlenstoffatom, das an drei weitere Kohlenstoffatome direkt gebunden ist.

Vorzugsweise handelt es sich bei den erfindungsgemäß eingesetzten tertiären Alkoholen um solche mit einem pXa-Wert von größer oder gleich 18.

Beispiele für die erfindungsgemäß eingesetzten tertiären Alkohole sind tertiär Butanol, 1,1-Dimethyl-1-propanol, 2,3-Dimethyl-2-butanol, 2,3-Dimethyl-2-pentanol, 1-Methyl-cyclohexanol, 1-Methyl-cyclopentanol, 2-Methyl-2-hexanol, 2-Methyl-2-pentanol, 2-Methyl-4-trimethylsilyl-2-butanol, 2-Methyl-4-dimethylphenylsilyl-2-butanol und 2-Phenyl-2-propanol, wobei schon aus Gründen der Handhabungssicherheit der Einsatz von tertiären Alkoholen mit einem Siedepunkt bei dem Druck der umgebenden Atmosphäre, d.h. 900 bis 1100 hPa, von über 100°C, wie etwa 1,1-Dimethyl-1-propanol (tertiär Amylalkohol), bevorzugt ist.

Bei den zur Herstellung der erfindungsgemäß eingesetzten Zubereitungen verwendeten Komponenten kann es sich jeweils um eine Art einer solchen Komponente wie auch um ein Gemisch aus mindestens zwei Arten einer jeweiligen Komponente handeln.

Das erfindungsgemäße Verfahren hat den Vorteil, daß die erfindungsgemäßen Zubereitungen auf einfache Art und Weise hergestellt werden können.

Des weiteren hat das erfindungsgemäße Verfahren den Vorteil, daß nur sehr geringe Mengen freien Chlorwasserstoffs entwikkelt werden und die Umsetzung der Komponenten gut kontrollierbar abläuft.

Die erfindungsgemäßen Zubereitungen können überall dort eingesetzt werden, wo auch bisher Phosphazene eingesetzt wurden. Insbesondere eignen sie sich als Katalysatoren in Verfahren zum Äquilibrieren und/oder Kondensieren von Organosiliciumverbindungen.

Ein weiterer Gegenstand der Erfindung ist ein Verfahren zum Äquilibrieren und/oder Kondensieren von Organosiliciumverbindungen in Gegenwart der erfindungsgemäßen Zubereitungen aus sauerstoffhaltigen Phosphazenen und tertiären Alkoholen.

Die angewendeten Mengen an erfindungsgemäß eingesetzten Zubereitungen aus sauerstoffhaltigen Phosphazenen und tertiärem Alkohol können bezogen auf die Phosphazene im Rahmen des erfindungsgemäßen Verfahrens zum Äquilibrieren und/oder Kondensieren von Organosiliciumverbindungen die gleichen sein, wie bei den bisher bekannten Verfahren zur Herstellung von Organosiliciumverbindungen durch Äquilibrierung und/oder Kondensation. Aufgrund der hohen Wirksamkeit der erfindungsgemäß eingesetzten Zubereitungen aus sauerstoffhaltigen Phosphazenen und tertiärem Alkohol sind im allgemeinen jedoch niedrigere Mengen als bei den bisher bekannten Verfahren völlig ausreichend.

Vorzugsweise werden die als Katalysator zur Förderung von Äquilibrierungs- und/oder Kondensationsreaktionen von Organosiliciumverbindungen wirksamen Zubereitungen aus sauerstoffhaltigen Chlorphosphazenen und tertiärem Alkohol in Mengen von 0,1 bis 1000 Gew.-ppm (Gewichtsteilen je Million Gewichtsteilen), besonders bevorzugt 1 bis 300 Gew.-ppm, bezogen auf das Gesamtgewicht der zu äquilibrierenden und/oder kondensierenden Organosiliciumverbindungen, eingesetzt.

Bei dem erfindungsgemäßen Verfahren können die Zubereitungen aus sauerstoffhaltigen Phosphazenen und tertiärem Alkohol als Reinsubstanzen eingesetzt werden, insbesondere dann, wenn sie flüssig sind. Sie können aber auch im Gemisch mit Stoffen, die mit den Zubereitungen aus sauerstoffhaltigen Chlorphosphazenen und tertiärem Alkohol nicht reagieren, eingesetzt werden, was jedoch nicht bevorzugt ist. So können bei dem erfindungsgemäßen Verfahren die erfindungsgemäßen Zubereitungen aus sauerstoffhaltigen Chlorphosphazenen und tertiärem Alkohol im Gemisch mit halogenfreiem organischen Lösungsmittel, tertiäre Alkohole ausgeschlossen, eingesetzt werden, wobei Lösungsmittel oder Lösungsmittelgemische mit einem Siedepunkt bzw. Siedebereich bei Normaldruck von bis zu 160°C, insbesondere von bis zu 120°C, bevorzugt sind.

Beispiele für solche Lösungsmittel sind Ether, wie Dioxan, Tetrahydrofuran, Diethylether und Diethylenglykoldimethylether, Ester, wie Methylacetat, Ethylacetat, n- und iso-Propylacetat, Diethylcarbonat und Ethylformiat, Kohlenwasserstoffe, wie Pentan, n-Hexan, Hexan-Isomerengemisch, Cyclohexan, Heptan, Octan, Waschbenzin, Petrolether, Benzol, Toluol und Xylole, Ketone, wie Aceton, Methylethylketon, Diethylketon und Methylisobutylketon, Amide, wie Dimethylformamid und N-Methylpyrrolidon, sowie Gemische dieser Lösungsmittel, wobei Kohlenwasserstoffe, insbesondere Toluol und Xylole, und Ester, insbesondere Ethylacetat, besonders bevorzugt sind.

Falls bei dem erfindungsgemäßen Verfahren die Zubereitungen aus sauerstoffhaltigen Phosphazenen und tertiärem Alkohol im Gemisch mit halogenfreien organischen Lösungsmitteln, ausgenommen tertiären Alkoholen, eingesetzt werden, beträgt die Konzentration an erfindungsgemäß eingesetzter Zubereitung vorzugsweise 0,01 bis 50 Gewichtsprozent, besonders bevorzugt 0,1 bis 20 Gewichtsprozent, bezogen auf das Gewicht des Gemischs.

Falls erwünscht, können die erfindungsgemäß eingesetzten Zubereitungen aus sauerstoffhaltigen Phosphazenen und tertiärem Alkohol selbstverständlich auch im Gemisch mit halogenhaltigen Lösungsmitteln eingesetzt werden, was jedoch insbesondere in toxikologischer Hinsicht meist nicht erwünscht ist.

Bei dem erfindungsgemäßen Verfahren können als Organosiliciumverbindung beliebige Organosiliciumverbindungen eingesetzt werden, die auch bisher in Gegenwart von Katalysatoren auf Phosphazenbasis äquilibriert und/oder kondensiert werden konnten.

Kondensationsreaktionen von Organosiliciumverbindungen sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Sigebundenem Halogen unter Austritt von Halogenwasserstoff. Unter Äquilibrierungsreaktionen werden die Umlagerungen von Siloxanbindungen in Siloxaneinheiten verstanden. Dabei können eine oder mehrere Siloxaneinheiten gleicher oder unterschiedlicher Viskosität in beliebigen Mengenverhältnissen mit oder ohne einer Änderung der Viskosität des Äquilibrierungsprodukts und mit oder ohne Erreichung der Gleichgewichtskonzentration an cyclischen Polysiloxanen im Äquilibrierungsprodukt der Äquilibrierungsreaktion unterzogen werden.

Äquilibrierungs- und Kondensationsreaktionen verlaufen häufig gleichzeitig.

Das erfindungsgemäße Verfahren betrifft bevorzugt Äquilibrierungsreaktionen.

Organosiliciumverbindungen, die in dem erfindungsgemäßen Verfahren eingesetzt werden können, sind allgemein bekannt und werden häufig durch die allgemeinen Formeln

X(SiR₂O)ₐSiR₂X (II)

und

(SiR₂O)_{b} (III)

wiedergegeben, wobei
R gleich oder verschieden sein kann und Wasserstoffatom oder einwertige, gegebenenfalls substituierte Kohlenwasserstoffreste bedeutet,
X gleich oder verschieden sein kann und Hydroxylgruppe, Rest -OR¹ mit R¹ gleich einwertigem organischen Rest, -OSiR₃ mit R gleich der vorstehenden Bedeutung oder Halogenatom bedeutet,
a 0 oder eine ganze Zahl von mindestens 1, bevorzugt 2 bis 1000, besonders bevorzugt 2 bis 500, und
b eine ganze Zahl im Wert von 3 bis 12, bevorzugt 4 bis 8, besonders bevorzugt 4, ist.

Obwohl durch die häufig verwendeten Formeln nicht dargestellt, können bis zu 5 Molprozent der Diorganosiloxaneinheiten durch andere Siloxaneinheiten, wie RSiO_{3/2}- und/oder SiO_{4/2}- Einheiten, ersetzt sein, wobei R die vorstehend dafür angegebene Bedeutung hat. Des weiteren können in den angegebenen Formeln bis zu 10 Molprozent der Diorganosiloxaneinheiten durch Carbosiloxyeinheiten, wie sie in DE-A 39 14 896, DE-A 41 23 423 und DE-A 195 22 144 beschrieben sind, ersetzt sein.

Bevorzugt handelt es sich bei Rest R um Wasserstoffatom und Kohlenwasserstoffreste mit 1 bis 18 Kohlenstoffatomen, wobei Kohlenwasserstoffreste mit 1 bis 4 Kohlenstoffatomen, insbesondere der Methylrest, besonders bevorzugt sind.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für einwertige, substituierte Kohlenwasserstoffreste R sind Cyanalkylreste, wie der β-Cyanethylrest, Halogenalkylreste, wie der 3,3,3-Trifluorpropylrest und der γ-Chlorpropylrest, Halogenarylreste, wie o-, m- und p-Chlorphenylreste, 3-Hydroxypropylrest, Acyloxyalkylreste, wie der γ-Acryloxypropylrest und der γ-Methacryloxypropylrest.

Bei Rest R¹ handelt es sich bevorzugt um Alkylreste mit 1 bis 4 Kohlenstoffatomen, besonders bevorzugt um den Methyl- und den Ethylrest.

Die Viskosität der bei dem erfindungsgemäßen Verfahren eingesetzten Organosiliciumverbindungen der Formel (II) liegt vorzugsweise zwischen 0,6 und 10⁶ mm²/s, besonders bevorzugt zwischen 10 und 10⁴ mm²/s, jeweils bei einer Temperatur von 25°C.

Beispiele für Verbindungen der Formel (II) sind α,ω-Dihydroxydimethylpolysiloxan mit einer Viskosität von 80 mm²/s bei 25°C, α,ω-Dihydroxydimethylpolysiloxan mit einer Viskosität von 20 000 mm²/s bei 25°C, α,ω-Dichlorodimethylpolysiloxan mit einer Viskosität von 40 mm²/s bei 25°C, α,ω-Bis(trimethylsiloxy)polymethylhydrogensiloxan mit einer Viskosität von 25 mm²/s bei 25°C, α,ω-Bis(trimethylsiloxy)polydimethylsiloxan mit einer Viskosität von 20 mm²/s bei 25°C, Hexamethyldisiloxan und 1,3-Divinyl-1,1,3,3-tetramethyldisiloxan.

Beispiele für Verbindungen der Formel (III) sind Hexamethylcyclotrisiloxan, Octamethylcyclotetrasiloxan und Decamethylcyclopentasiloxan.

Hat in Formel (II) X die Bedeutung von -OSiR₃ mit R gleich der obengenannten Bedeutung, so handelt es sich um Organosiliciumverbindungen, welche die Kettenlänge regeln.

Des weiteren können bei dem erfindungsgemäßen Verfahren beliebige, die Kettenlänge regelnde Organosiliciumverbindungen eingesetzt werden, die auch bei den bisher bekannten Verfahren zum Äquilibrieren und/oder Kondensieren in Gegenwart eines Katalysators auf Phosphazenbasis mitverwendet werden konnten.

Vorzugsweise handelt es sich bei derartigen, die Kettenlänge regelnden Organosiliciumverbindungen neben den Verbindungen der Formel (II) mit X gleich -OSiR₃ um solche der Formel

R² ₃SiZ (IV),

worin
R² gleich oder verschieden sein kann und eine für R angegebene Bedeutung hat und
Z Hydroxylgruppe, Rest -OR¹ mit R¹ gleich einwertigem organischen Rest oder Halogenatom bedeutet.

Beispiele für Rest R² sind die für R gleich organischem Rest angegebenen Beispiele.

Bei Z handelt es sich vorzugsweise um Hydroxylgruppe, Chloratom, Methoxyrest und Ethoxyrest.

Beispiele für Verbindungen der Formel (IV) sind Trimethylchlorsilan und Trimethylmethoxysilan.

Die Menge an eingesetzter, die Kettenlänge regelnder Organosiliciumverbindung richtet sich nach der gewünschten Höhe des Molekulargewichts der durch Kondensation und/oder Äquilibrierung hergestellten Organopolysiloxane und ist bereits bekannt.

Die erfindungsgemäß eingesetzten Organosiliciumverbindungen sind handelsübliche Produkte bzw. nach in der Silicon-Chemie üblichen Verfahren herstellbar.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Die angewendeten Temperaturen und Drücke können im erfindungsgemäßen Verfahren ebenfalls die gleichen sein wie bei den bisher bekannten Verfahren zum Äquilibrieren und/oder Kondensieren von Organosiliciumverbindungen.

Die erfindungsgemäßen Äquilibrierungs- und/oder Kondensationsreaktionen werden vorzugsweise bei 50 bis 200°C, besonders bevorzugt 80 bis 160°C, durchgeführt.

Die Äquilibrierungs- und/oder Kondensationsreaktionen können bei einem Druck der umgebenden Atmosphäre, also 900 bis 1100 hPa, durchgeführt werden. Um die Abführung der bei der Kondensation gebildeten Spaltprodukte, wie beispielsweise Wasser, HCl oder Alkohol, zu erleichtern, wird das Äquilibrieren und/oder Kondensieren der Organosiliciumverbindungen vorzugsweise bei einem Druck unterhalb 80 kPa durchgeführt. Das Kondensieren, insbesondere aber das Äquilibrieren, ist aber auch bei höheren Drücken durchführbar.

Das erfindungsgemäße Verfahren kann sowohl absatzweise als auch kontinuierlich durchgeführt werden.

Nach Erreichen der gewünschten Viskosität kann die Viskosität der im Rahmen des erfindungsgemäßen Verfahrens erhaltenen Organosiliciumverbindung konstant gehalten werden, indem der erfindungsgemäß verwendete Katalysator bzw. ein Umsetzungsprodukt, welches aus diesem Katalysator durch Umsetzung mit zu kondensierender und/oder zu äquilibrierender Organosiliciumverbindung gebildet wurde und ebenfalls das Äquilibrieren und/oder Kondensieren von Organosiliciumverbindungen fördert, durch Zugabe von Inhibitoren bzw. Desaktivatoren, die auch bisher im Zusammenhang mit Phosphazenen eingesetzt wurden, wie z.B. Triisononylamin, n-Butyllithium, Lithiumsiloxanolat, Ammoniakwasser, Hexamethyldisilazan und Magnesiumoxid, inhibiert bzw. desaktiviert wird.

Um eine gute Verteilung der bei dem erfindungsgemäßen Verfahren eingesetzten Komponenten ineinander zu gewährleisten, wird vorzugsweise das Gemisch dieser Stoffe während der Durchführung des erfindungsgemäßen Verfahrens bewegt.

Die erfindungsgemäß hergestellten Organopolysiloxane, insbesondere lineare Organopolysiloxane, können für alle Zwecke verwendet werden, bei denen auch die nach bisher bekannten Verfahren durch Äquilibrieren und/oder Kondensieren von Organosiliciumverbindungen erzeugten linearen Organopolysiloxane eingesetzt werden konnten, wie z.B. für Pflegemittel und kosmetische Rezepturen, als Fadengleitmittel, zur Herstellung von Organopolysiloxanelastomeren, wobei die Vernetzung je nach Art der endständigen Einheiten der linearen Organopolysiloxane durch Kondensation, Anlagerung von Si-gebundenem Wasserstoff an z.B. SiC-gebundene Vinylgruppen oder durch Radikalbildung erfolgen kann, und zur Herstellung von klebrige Stoffe abweisenden Überzügen.

Das erfindungsgemäße Verfahren zum Äquilibrieren und/oder Kondensieren von Organosiliciumverbindungen hat den Vorteil, daß es einfach in der Durchführung ist und hohe Ausbeuten erzielt werden.

Des weiteren hat das erfindungsgemäße Verfahren zum Äquilibrieren und/oder Kondensieren den Vorteil, daß Gleichgewichtszustände schneller erreicht werden bzw. eine Gleichgewichtseinstellung mit geringeren Mengen Katalysator möglich ist.

Die erfindungsgemäßen, die Äquilibrierungs- und Kondensationsprozesse fördernden Zubereitungen aus sauerstoffhaltigen Phosphazenen und tertiären Alkoholen zeigen eine sehr hohe Aktivität und sind zudem über Wochen lagerfähig.

Des weiteren haben die erfindungsgemäßen Zubereitungen den Vorteil, daß sie farblos bis höchstens gelblich gefärbt sind und auch bei Lagerung über Wochen nicht zur Nachdunkelung neigen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Das in den folgenden Beispielen eingesetzte sauerstoffhaltige Phosphazen A hat die Formel PCl₃=N(-PCl₂=N)ₙ-PCl₂O mit n gleich 0 bis 2, durchschnittlich 1, und wurde gemäß der in Beispiel 1 der eingangs zitierten US-A 5,380,902 beschrieben Verfahrensweise hergestellt.

### Beispiel 1

66,7 g sauerstoffhaltiges Phosphazen A werden unter Stickstoffatmosphäre vorgelegt. Hierzu tropft man über einen Zeitraum von insgesamt 4 Stunden unter Rühren 100 g tert. Butanol, so daß die Innentemperatur von 40°C nicht überschritten wird. Es werden 166 g einer klaren gelblichen Lösung mit einer Viskosität von 3,60 mm²/s erhalten.

### Beispiel 2

Die in Beispiel 1 beschriebene Arbeitsweise wird wiederholt mit der Abänderung, daß anstelle von 100 g tert. Butanol 100 g tert. Amylalkohol eingesetzt wird. Es werden 166 g einer homogenen, leicht trüben Lösung mit einer Viskosität von 11,25 mm²/s erhalten.

### Beispiel 3

100 g tert. Butanol werden unter Stickstoffatmosphäre vorgelegt. Hierzu tropft man über einen Zeitraum von insgesamt 4 Stunden unter Rühren 66,7 g sauerstoffhaltiges Phosphazen A, so daß die Innentemperatur von 40°C nicht überschritten wird. Es werden 166 g einer klaren gelblichen Lösung mit einer Viskosität von 11,29 mm²/s erhalten.

### Beispiel 4

50 g 1,3-Divinyltetramethyldisiloxan werden bei 100°C mit 350 g eines mit Methylgruppen endgestopperten Polydimethylsiloxans der Viskosität 35 mm²/s und 0,1 g der in Beispiel 1 erhaltenen Lösung unter Rühren equilibriert. Nach 30 Minuten ist eine Viskosität von 8,9 mm²/s erreicht, die sich auch nach weiteren 30 Minuten nicht mehr ändert (Startviskosität: 18,4 mm²/s).

### Vergleichsbeispiel 1

Die in Beispiel 4 beschriebene Verfahrensweise wird wiederholt mit der Abänderung, daß als Katalysator anstelle der Lösung gemäß Beispiel 1 eine 40 %ige Lösung von sauerstoffhaltigem Phosphazen A in Ethylacetat eingesetzt wird. Nach 90 Minuten ist ein Viskositätsabfall auf 17,4 mm²/s erreicht. Das Siloxangemisch befindet sich nicht im Gleichgewicht.

### Beispiel 5

Ein Gemisch aus 50 g 1,3-Divinyltetramethyldisiloxan, 10 g Decamethylcyclopentasiloxan und 100 g α,ω-Dihydroxypolydimethylsiloxan der Viskosität 20 000 mm²/s werden durch Zusatz von 28 µl der in Beispiel 1 erhaltenen Lösung bei 65°C mit und unter Rühren equilibriert. Nach 4 Stunden ist eine Viskosität von 8,7 mm²/s erreicht (Startviskosität: 740 mm²/s).

### Vergleichsbeispiel 2

Die in Beispiel 5 beschriebene Verfahrensweise wird wiederholt mit der Abänderung, daß als Katalysator anstelle der Lösung gemäß Beispiel 1 eine 40 %ige Lösung von sauerstoffhaltigem Phosphazen A in Ethylacetat eingesetzt wird. Nach 4 Stunden ist eine Viskosität von 232 mm²/s erreicht (Startviskosität: 740 mm²/s).

### Beispiel 6

197 g eines mit Methylgruppen endgestopperten Polydimethylsiloxans der Viskosität 10 000 mm²/s werden mit 10 g 1,3-Divinyltetramethyldisiloxan unter Zugabe von 50 µl der in Beispiel 2 erhaltenen Lösung bei 95°C unter Rühren equilibriert. Nach 25 Minuten ist eine Viskosität von 63,8 mm²/s erreicht, die nach weiteren 15 Minuten nur noch auf 63,5 mm²/s abnimmt.

### Vergleichsbeispiel 3

Die in Beispiel 6 beschriebene Verfahrensweise wird wiederholt mit der Abänderung, daß als Katalysator anstelle der Lösung gemäß Beispiel 2 eine 40 %ige Lösung von sauerstoffhaltigem Phosphazen A in Ethylacetat eingesetzt wird. Nach 90 Minuten wird eine Viskosität von 240 mm²/s erhalten, wobei jedoch noch kein Gleichgewicht erreicht wird.

### Vergleichsbeispiel 4

Die in Beispiel 1 beschriebene Arbeitsweise wird wiederholt mit der Abänderung, daß anstelle von tert. Butanol n-Butylalkohol eingesetzt wird, wobei eine unkontrollierte Erhitzung unter Entwicklung von HCl-Gas erfolgt. Nach vollständiger Zugabe des eingesetzten n-Butylalkohols erfolgt Phasentrennung und Abscheidung hochpolymerer, schwer löslicher Massen.

### Vergleichsbeispiel 5

Die in Beispiel 1 beschriebene Arbeitsweise wird wiederholt mit der Abänderung, daß anstelle von tert. Butanol sec.-Butylalkohol eingesetzt wird, wobei sich eine starke Entwicklung von HCl-Gas einstellt. Die entstehende Lösung scheidet beim Abkühlen schwer lösliche Massen ab.

## Patentansprüche

1. Zubereitungen, hergestellt durch Vermischen von sauerstoffhaltigen Phosphazenen mit tertiären Alkoholen bei einer Temperatur von 0 bis 70°C und einem Druck zwischen 900 und 1100 hPa.

2. Zubereitungen gemäß Anspruch 1, dadurch gekennzeichnet, daß es sich bei den sauerstoffhaltigen Phosphazenen um solche der allgemeinen Formel
Y-PCl₂=N(-PCl₂=N)ₙ-PCl₂O (I)
handelt, wobei
Y Chloratom oder Hydroxylgruppe bedeutet und
n 0 oder eine ganze Zahl von 1 bis 8, bevorzugt 0 oder eine ganze Zahl von 1 bis 4, besonders bevorzugt 1 bis 3, bedeutet, und/oder deren Kondensationsprodukte.

3. Zubereitungen gemäß Anspruch 1 oder 2, dadurch gekennzeichnet, daß es sich bei den tertiären Alkoholen um solche mit einem pKa-Wert von größer oder gleich 18 handelt.

4. Verfahren zur Herstellung der Zubereitungen gemäß einem oder mehreren der Ansprüche 1 bis 3, durch Vermischen von sauerstoffhaltigen Phosphazenen und tertiären Alkoholen, bei einer Temperatur von 0 bis 70°C und einem Druck zwischen 900 und 1100 hPa.

5. Verfahren zum Äquilibrieren und/oder Kondensieren von Organosiliciumverbindungen in Gegenwart von Zubereitungen gemäß einem oder mehreren der Ansprüche 1 bis 3.

6. Verfahren nach Anspruch 5, dadurch gekennzeichnet, daß die Zubereitung in Mengen von 0,1 bis 1000 Gew.-ppm (Gewichtsteilen je Million Gewichtsteilen) eingesetzt wird.

## Claims

1. Preparations obtained by mixing oxygen-containing phosphazenes with tertiary alcohols at a temperature of from 0 to 70°C and a pressure of from 900 to 1100 hPa.

2. Preparations according to Claim 1, characterized in that the oxygen-containing phosphazenes are phosphazenes of the formula
Y-PCl₂=N(-PCl₂=N)ₙ-PCl₂O (I),
where
Y is a chlorine atom or a hydroxyl group and
n is 0 or an integer from 1 to 8, preferably 0 or an integer from 1 to 4, particularly preferably from 1 to 3, and/or their condensation products.

3. Preparations according to Claim 1 or 2, characterized in that the tertiary alcohols have a pKa of greater than or equal to 18.

4. Process for preparing the preparations according to one or more of Claims 1 to 3 by mixing oxygen-containing phosphazenes and tertiary alcohols at a temperature of from 0 to 70°C and a pressure of from 900 to 1100 hPa.

5. Process for equilibrating and/or condensing organosilicon compounds in the presence of preparations according to one or more of Claims 1 to 3.

6. Process according to Claim 5, characterized in that the preparation is used in amounts of from 0.1 to 1000 ppm by weight (parts by weight per million parts by weight).

## Revendications

1. Compositions préparées en mélangeant des phosphazènes oxygénés avec des alcools tertiaires à une température de 0 à 70°C et une pression comprise entre 900 et 1 100 hPa.

2. Compositions selon la revendication 1, caractérisées en ce que les phosphazènes oxygénés sont ceux de formule générale
Y-PCl₂=N(-PCl₂=N)ₙ-PCl₂O (I)
dans laquelle
Y représente un atome de chlore ou un groupe hydroxyle et
n vaut 0 ou est un entier de 1 à 8, de préférence 0 ou un entier de 1 à 4, particulièrement préférablement de 1 à 3, et/ou leurs produits de condensation.

3. Compositions selon la revendication 1 ou 2, caractérisées en ce que les alcools tertiaires sont ceux ayant un pKa supérieur ou égal à 18.

4. Procédé de préparation des compositions selon l'une ou plusieurs des revendications 1 à 3, en mélangeant des phosphazènes oxygénés et des alcools tertiaires à une température de 0 à 70°C et une pression comprise entre 900 et 1 100 hPa.

5. Procédé d'équilibrage et/ou de condensation de composés organosiliciés en présence de compositions selon l'une ou plusieurs des revendications 1 à 3.

6. Procédé selon la revendication 5, caractérisé en ce que la composition est utilisée en quantités de 0,1 à 1 000 ppm en poids (parties en poids par million de parties en poids).
